# EUROPEAN PATENT APPLICATION

(11) **EP 4 427 578 A1**
(43) Date of publication of application: **11.09.2024**
(21) Application number: 23160769.8
(22) Date of filing: 08.03.2023
(51) Int. Cl.: A01F 15/10

(54) **SQUARE BALER WITH ACTIVE DROP FLOOR**

(71) Applicant: CNH Industrial Belgium N.V., 8210 Zedelgem (BE)
(72) Inventor: Van Hullebusch, Bart, 8210 Zedelgem (BE); Liefooghe, Dries, 8210 Zedelgem (BE); Devroe, Jeroen, 8210 Zedelgem (BE); Dewitte, Tomas, 8210 Zedelgem (BE); De Baere, Freek, 8210 Zedelgem (BE)
(74) Representative: CNH Industrial IP Department

(57) **Abstract**

A rotor cutter assembly (18) for an agricultural baler (10) includes: a rotatable rotor (50); a rotor floor assembly (300) disposed below the rotor (50) and comprising a frame assembly (310); and a cutter (320) coupled to the frame assembly (310) and configured to cut crop material moved by the rotor (50) during rotation of the rotor (50) while the frame assembly (310) is in a cutting position. The rotor floor assembly (300) includes a suspension assembly (330) coupled to the frame assembly (310) such that a distance between the cutter (320) and the rotor (50) is adjustable responsively to crop volume and/or density changes between the rotor (50) and the cutter (320) while the frame assembly (310) is in the cutting position, the frame assembly (310) is movable to a maintenance position where the cutter (320) is removable from the frame assembly (310), and only a portion (520) of the frame assembly (310) is movable in the cutting position.

## Description

### FIELD OF THE INVENTION

The present invention pertains to agricultural vehicles and, more specifically, to large square balers.

### BACKGROUND OF THE INVENTION

Agricultural balers are used to consolidate and package crop material so as to facilitate the storage and handling of the crop material for later use. For example, when the crop is hay, a mower-conditioner is typically used to cut and condition the crop material for windrow drying in the sun. As another example, when the crop is straw an agricultural combine discharges non-grain crop material from the rear of the combine defining the straw which is to be picked up by the baler. The cut crop material is usually dried, and a baler, such as a large/small square baler or round baler, straddles the windrows and travels along the windrows to pick up the crop material and form it into bales.

On a large square baler, pickup at the front of the baler gathers the cut and windrowed crop material from the ground. The pickup includes a pickup roll, and optionally may include other components such as side shields, stub augers, a wind guard, etc. A rotor cutter assembly is then used to move the crop material from the pickup to a pre-compression chamber or duct. The rotor cutter assembly forms a so-called 'wad' of crop within the pre-compression chamber which is then transferred to a main bale chamber.

Stuffer apparatus transfers the wad of crop material in charges from the pre-compression chamber to the main bale chamber. Typically, the stuffer apparatus includes stuffer forks which are used to move the wad of crop material from the pre-compression chamber to the main bale chamber, in sequence with the reciprocating action of a plunger within the main bale chamber.

In the main bale chamber, after the wad is injected into the bale chamber, the plunger compresses the wad of crop material into a so-called 'flake' against previously formed flakes to form a bale and, at the same time, gradually advances the bale towards the outlet of the bale chamber. Pressure exerted by the walls of the bale chamber dictates the frictional force needed to overcome friction and shift the flakes in the chamber. An increased force to shift the flakes causes the plunger to compact the flakes tighter, and thereby produce a higher-density bale.

The bale chamber typically has three moving walls (a top wall and two side walls), which may be positioned by two hydraulically controlled actuators connected to a cam mechanism. When enough flakes have been added and the bale reaches a full (or other predetermined) size, a number of knotters are actuated which wrap and tie twine, cord, or the like around the bale while it is still in the main chamber. The twine is cut and the formed bale is ejected out the back of the baler as a new bale is formed. The resistance of the formed bale to being pushed out is a key factor in the density and form of the subsequently formed bale.

The rotor cutter assembly is typically the entry point of the crop material into the machine. The rotor cutter assembly thus represents an area that is prone to clogging due to the flow of crop material into the rotor cutter assembly being unpredictable compared to, for example, the flow into the pre-compression chamber. This may be due, for example, to uneven crop density in a windrow and/or a high moisture content in crop material that is fed to the rotor cutter assembly and/or an uneven yield along the swath. If a clog forms at the rotor cutter assembly, a user will typically need to stop operation of the baler and manually remove the clogged crop material by lowering the cutter and removing the plug. In some occasions, the removal is done mechanically by a cutout clutch hammering action, which generates torque spikes on the rotor forcing the material through the knives. Regardless of how the clog is removed, the machine needs to be shut down and restarted, which can be both time-consuming and frustrating to the user.

What is needed in the art is a way to reduce the risk of clogs occurring at a rotor cutter of an agricultural baler.

### SUMMARY OF THE INVENTION

Exemplary embodiments provided according to the present disclosure provide a rotor cutter assembly for an agricultural baler that includes a cutter that can move relative to a rotor of the baler while also being movable to a maintenance position.

In some embodiments provided according to the present disclosure, a rotor cutter assembly for an agricultural baler includes: a rotatable rotor; a rotor floor assembly disposed below the rotor and including a frame assembly; and a cutter coupled to the frame assembly and configured to cut crop material moved by the rotor during rotation of the rotor while the frame assembly is in a cutting position. The rotor floor assembly includes a suspension assembly coupled to the frame assembly such that a distance between the cutter and the rotor is adjustable responsively to crop volume and/or density changes between the rotor and the cutter while the frame assembly is in the cutting position, the frame assembly is movable to a maintenance position where the cutter is removable from the frame assembly, and only a portion of the frame assembly is movable in the cutting position.

In some embodiments, the frame assembly includes a first frame and a second frame coupled to the first frame, the second frame being the only portion of the frame assembly that is movable in the cutting position.

The second frame may include a pair of cutter rails holding the cutter. The second frame may include a channel and the first frame may include a rectangular tube that resides within the channel.

In some embodiments, the first frame includes a pair of first arms coupled to one another and the second frame includes a pair of second arms coupled to one another, the pair of first arms being disposed between the pair of second arms. Each of the first arms may include a pair of openings that are each aligned with a respective opening of the other first arm and each of the second arms may include a pair of elongated slots, each of the elongated slots being aligned with a respective slot of the other second arm as well as a pair of aligned openings of the first arms.

In some embodiments, an actuator is coupled to the first frame that is configured to selectively move the frame assembly from the cutting position to the maintenance position. A locking mechanism may be coupled to the first frame, the locking mechanism being movable from a locking position that prevents the actuator from moving the frame assembly from the cutting position and a release position that allows the actuator to move the frame assembly.

In some embodiments, the cutter includes a knife drawer having a plurality of knives.

In some embodiments, the suspension assembly includes at least one pair of springs and/or dampers, which may be in the form of one or more coil springs and/or one or more gas springs and/or one or more fluid cylinders, coupled to the frame assembly. The at least one pair of springs and/or dampers may be coupled to the second frame of the frame assembly.

In some exemplary embodiments provided according to the present disclosure, an agricultural baler includes: a chassis; a pickup carried by the chassis and including a plurality of tines configured to pick up crop material from a field; and the previously described rotor cutter assembly carried by the chassis and configured to receive picked up crop material from the pickup and cut the received crop material.

In some embodiments, the agricultural baler includes at least one sensor associated with the frame assembly and configured to output a distance signal corresponding to the distance between the cutter and the rotor and a controller operably coupled to the at least one sensor, the controller being configured to adjust at least one operating parameter of the agricultural baler and/or output an alert signal responsively to the distance between the cutter and the rotor changing by more than a defined amount. The at least one operating parameter may include a rotation speed of the rotor, a rotation speed of the pickup, a travel speed of the agricultural baler, and/or triggering of a stuffer apparatus. The agricultural baler may further include a clutch coupled to the rotor and configured to disconnect the rotor from a power source responsively to a resistance to rotation of the rotor exceeding a defined value, the controller being configured to determine the resistance to rotation is approaching the defined value and adjust the at least one operating parameter to avoid the resistance to rotation reaching the defined value.

One potential benefit that may be realized by exemplary embodiments provided according to the present disclosure is that the rotor floor assembly can be what is known as an "active" floor assembly that allows the frame assembly to drop in response to high crop volume and/or pressure between the rotor and the cutter, reducing the risk of a clog occurring, while also allowing the cutter to be easily removed for inspection, repair, maintenance, and/or replacement.

Another potential benefit that may be realized by exemplary embodiments provided according to the present disclosure is that sensor data obtained from the frame assembly moving can be utilized to adjust operation of the agricultural baler and further reduce the risk of a clog occurring.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates perspective cutaway view of an agricultural baler including a pickup and a rotor cutter assembly provided according to the present disclosure;
FIG. 2 is a perspective view of the pickup and rotor cutter assembly of FIG. 1;
FIG. 3 is a perspective view of the rotor cutter assembly of FIGS. 1-2 with a rotor and a cutter removed to better illustrate various components of the rotor cutter assembly;
FIG. 4 is another perspective view of the rotor cutter assembly of FIGS. 1-3 with the rotor removed but the cutter included;
FIG. 5A illustrates a perspective view of an exemplary embodiment of a first frame of a frame assembly of the rotor cutter assembly of FIGS. 1-4;
FIG. 5B illustrates a perspective view of an exemplary embodiment of a second frame of the frame assembly of the rotor cutter assembly of FIGS. 1-4;
FIG. 6 illustrates a perspective view of the rotor cutter assembly of FIGS. 1-4 with a locking mechanism in a locking position;
FIG. 7 illustrates the rotor cutter assembly of FIGS. 1-4 and 6 with the locking mechanism of FIG. 6 after it has moved to a release position;
FIG. 8 illustrates the rotor cutter assembly of FIGS. 1-4 and 6-7 after an actuator has moved the frame assembly to allow removal of the cutter from the frame assembly; and
FIG. 9 illustrates sensor readouts from one or more sensors of the agricultural baler of FIG. 1 during operation and movement of the frame assembly.

### DETAILED DESCRIPTION OF THE INVENTION

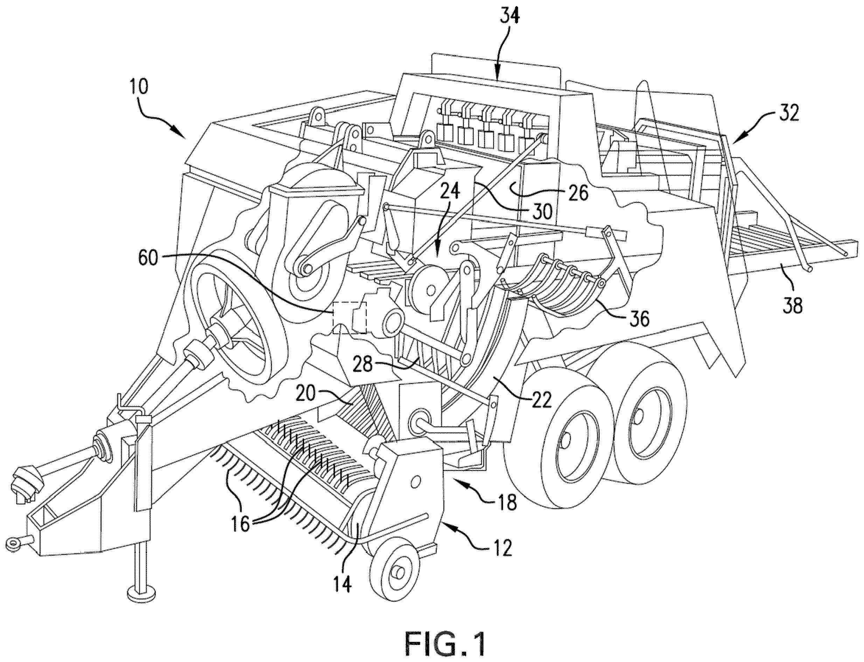

Referring now to the drawings, FIG. 1 shows an agricultural baler 10 in the form of a large square baler. In particular, FIG. 1 is a perspective cutaway view illustrating the inner workings of the large square baler 10. The baler 10 has a pickup unit or apparatus 12 for lifting crop material from windrows. The pickup 12 has a rotatable pickup roll (or rotor or cylinder) 14 with a number of pickup tines 16 to move the collected crop rearward towards a rotor cutter assembly 18. Optionally, a pair of stub augers (one of which is shown, but not numbered) is positioned above the pickup roll 14 to move the crop material laterally inward.

The rotor cutter assembly 18 has a rotatable rotor 50, which may include rotor tines 20, that push the crop towards a knife rack with knives for cutting the crop and into a pre-compression chamber 22 to form a wad of crop material. The tines 20 intertwine the crop together and pack the crop within the pre-compression chamber 22. The pre-compression chamber 22 and the rotor assembly with the tines 20 function as a first stage for crop compression.

Once the pressure in the pre-compression chamber 22 reaches a predetermined sensed value, a stuffer unit or apparatus 24 moves the wad of crop from the pre-compression chamber 22 to a bale chamber 26. The stuffer apparatus 24 includes stuffer forks 28 which thrust the wad of crop directly in front of a plunger 30, which reciprocates within the bale chamber 26 and compresses the wad of crop into a flake. The stuffer forks 28 return to their original state after the wad of material has been moved into the bale chamber 26. The plunger 30 compresses the wads of crop into flakes to form a bale and, at the same time, gradually advances the bale toward an outlet 32 of the bale chamber 26. The bale chamber 26 and plunger 30 function as a second stage for crop compression.

When enough flakes have been added and the bale reaches a full (or other predetermined) size, the knotters 34 are actuated which wrap and tie twine around the bale while it is still in the bale chamber. Needles 36 bring the lower twine up to the knotters 34 and the tying process then takes place. The twine is cut and the formed bale is ejected from a discharge chute 38 as a new bale is formed.

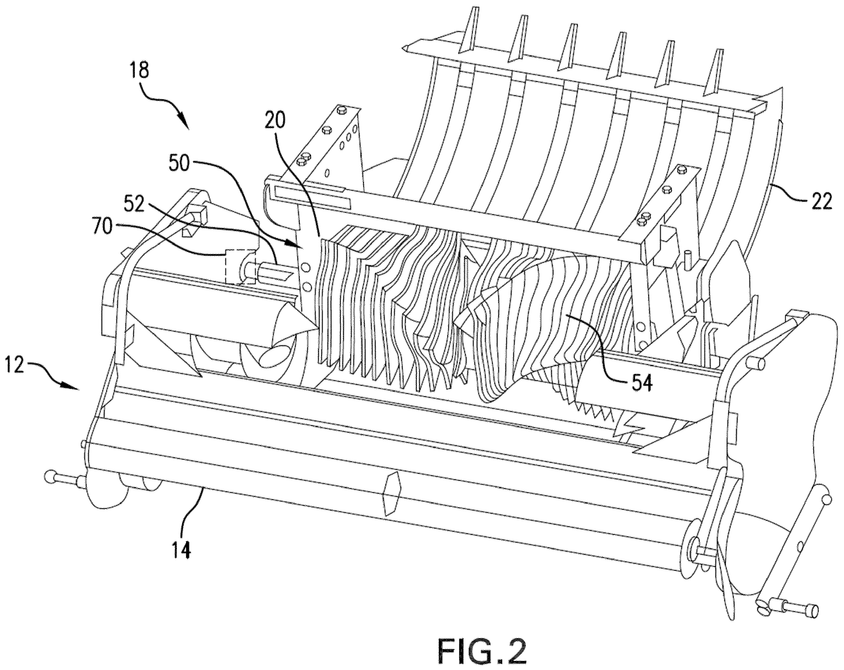

FIG. 2 shows a perspective view of the pickup 12 and the rotor cutter assembly 18. Referring to FIG. 2, the rotor cutter assembly 18 includes the rotor 50 having a cylindrical rotor shaft 52 rotatable about its axis. The rotor 50 may also include a number of tine plates 54 on the rotor shaft 52, where the tine plates 54 include the rotor tines 20.

In known rotor cutter assemblies, high volumes of crop material and/or wet crop material can lead to clogs. While this issue is not unique to large square balers, *i.e.,* the issue is also present in round balers, one aspect of large square balers that complicates solving this issue is that many large square balers have a removable cutter that must be dropped to a maintenance position for removal. In some large square balers, for example, the cutter may include a knife drawer that has many knives operating in conjunction with the rotor to cut crop material. In order to remove the knife drawer, the knife drawer must be dropped down from its cutting position to the maintenance position so a user can slide out the knife drawer. When the knife drawer is in the cutting position, the knife drawer is locked by a locking mechanism so the knife drawer does not spontaneously move to its maintenance position during operation. A known solution in round balers to have an "active" rotor floor with a cutter that moves during high volumes of crop input has thus not previously been provided in large square balers because, unlike large square balers, the cutters in round balers are generally not removable in the same fashion as large square balers, *i.e.,* the cutters are not locked during operation in the same manner.

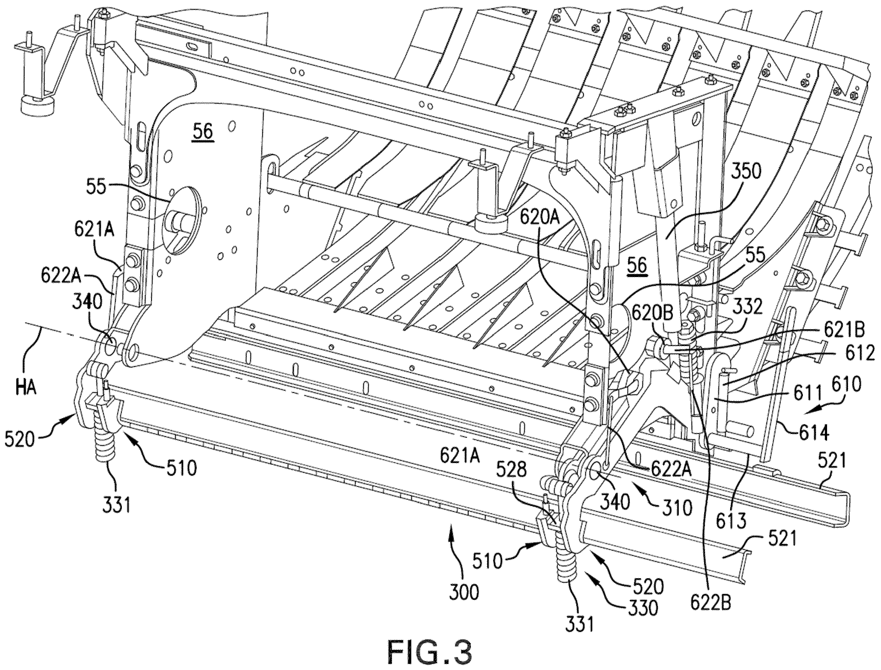

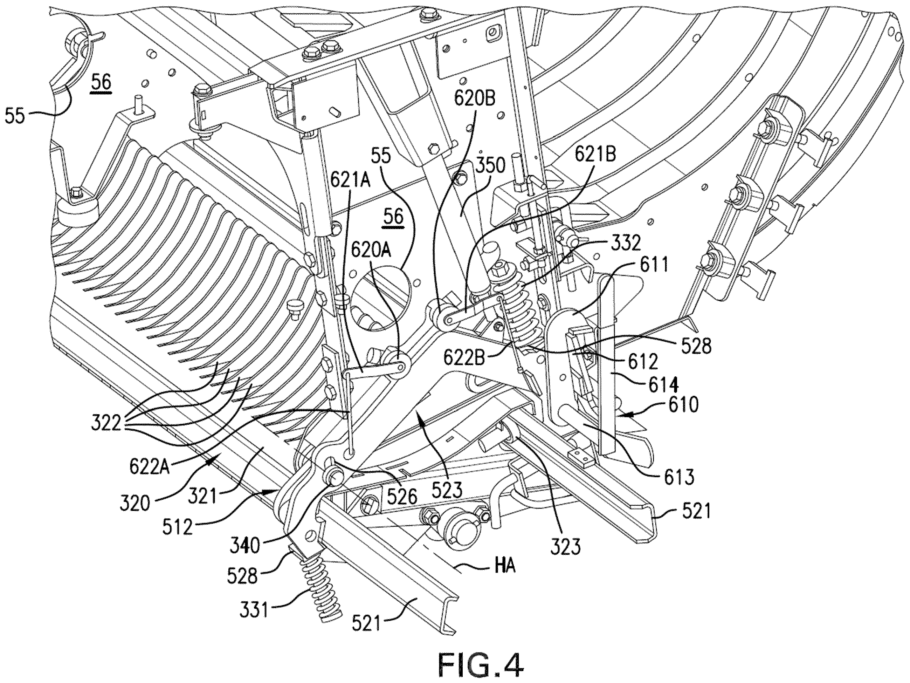

To address some of the previously described issues, and referring now to FIGS. 3-8, an exemplary embodiment of the rotor cutter assembly 18 provided according to the present disclosure is illustrated. For ease of illustration, it should be appreciated that the rotor 50 is not illustrated in FIGS. 3-8 but would normally be mounted with the rotor shaft 52 disposed in a pair of rotor openings 55 formed in side sheets 56. The rotor cutter assembly 18 includes a rotor floor assembly 300 that is disposed below the rotor 50 and includes a frame assembly 310 and a cutter 320 that is coupled to the frame assembly 310 and configured to cut crop motor moved by the rotor 50 during rotation of the rotor 50 while the frame assembly 310 is in a cutting position, which is best illustrated in FIG. 4. The cutter 320 may, for example, include a knife drawer 321 having a plurality of knives 322 that cooperate with the rotor 50 to cut crop material before the cut crop material is pushed by the rotor 50 to the pre-compression chamber 22. The rotor floor assembly 300 includes a suspension assembly 330 that is coupled to the frame assembly 310 such that a distance between the cutter 320 and the rotor 50 is adjustable responsively to crop volume and/or density changes between the rotor 50 and the cutter 320 while the frame assembly 310 is in the cutting position. The frame assembly 310 is movable to a maintenance position where the cutter 320 is removable from the frame assembly 310 while only a portion of the frame assembly 310 is movable in the cutting position, as will be described further herein. As used herein, the cutter 320 is "removable" from the frame assembly 310 in the sense that the cutter 320 can be removed from the frame assembly 310 without substantially damaging either the frame assembly 310 or the cutter 320 so the cutter 320 can be readily removed and re-installed. The cutter 320 may also be moved in the maintenance position, without being fully removed, for inspection, cleaning, maintenance, etc. Thus, the provided rotor floor assembly 300 allows the cutter 320 to both move in the cutting position during operation due to movement of a portion of the frame assembly 310 but also be movable to a maintenance position where the cutter 320 is accessible for maintenance and removable from the frame assembly 310, in contrast to known large square balers.

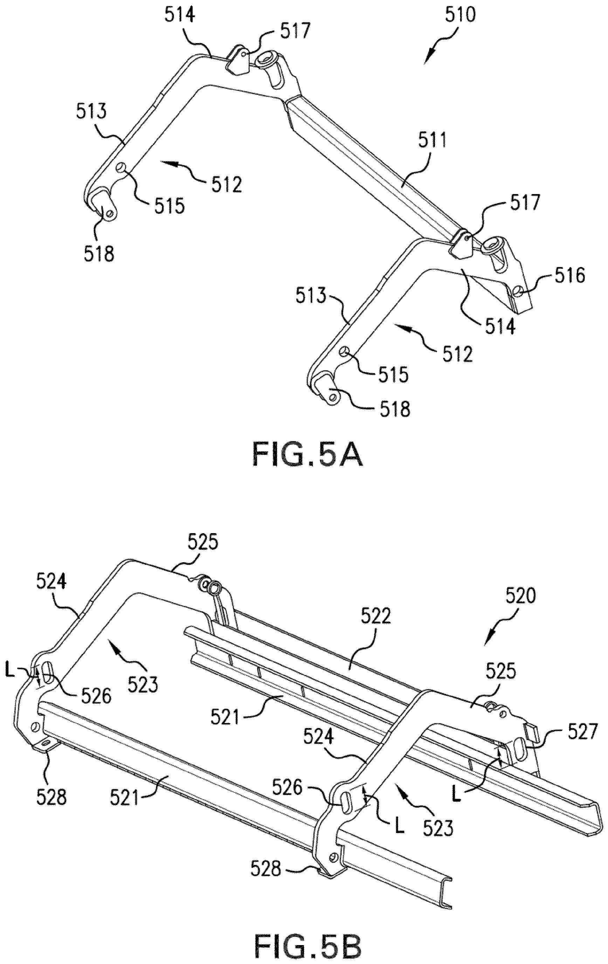

With further reference to the drawings, and FIGS. 5A and 5B in particular, it is illustrated that the frame assembly 310 may include a first frame 510 and a second frame 520 that is coupled to the first frame 510, with the second frame 520 being the only portion of the frame assembly 310 that is movable while the frame assembly 310 is in the cutting position. To move the frame assembly 310 to the maintenance position, the frames 510, 520 may pivot about a hinge axis HA defined by one or more hinge pins 340 relative to the first rotor frame containing side plates 56. After pivoting the frames 510, 520 to the maintenance position, the cutter 320 may then be removed and/or otherwise accessible for maintenance. In some embodiments, the second frame 520 includes a pair of cutter rails 521 that hold the cutter 320, e.g., the knife drawer 321. The knife drawer 321 may include one or more rollers 323 that each reside in a respective one of the cutter rails 521, allowing the knife drawer 321 to slide out of the cutter rails 521 when frames 510, 520 are in the maintenance position. When frame assembly 310 is in the cutting position, however, the first frame 510 may prevent sliding of the cutter 320 from the cutter rails 521 so the cutter 320 remains in the cutting position and can cut crop material in conjunction with the rotor 50. The second frame 520 may include a channel 522 and the first frame 510 may include a rectangular tube 511 that resides within the channel 522, in order to stabilize and/or limit relative movement between the frames 510, 520. The rectangular tube 511 may only, for example, slide the same amount of distance that the second frame 520 can move while the frame assembly 310 is in the cutting position. Thus, it should be appreciated that the first frame 510 can prevent removal of the cutter 320 from the frame assembly 310 unless the frame assembly 310 has been moved to the maintenance position, e.g., by moving the first frame 510 to carry the second frame 520 with it, as described further herein.

Referring specifically now to FIG. 5A, which illustrates the first frame 510, it can be seen that the first frame 510 may include a pair of first arms 512 that are coupled to one another. In some embodiments, the first arms 512 are coupled to one another by the rectangular tube 511. Each of the first arms 512 may include a front section 513 that is coupled to a rear section 514, with the sections 513, 514 extending in opposite directions. The rectangular tube 511 may couple to the rear section 514 of each of the first arms 512. Each of the first arms 512 may also include a pair of openings 515, 516 that are each aligned with a respective opening 515, 516 of the other first arm 512. For example, each of the first arms 512 may have an opening 515 formed in the front section 513 and another opening 516 formed in the rear section 514, with the openings 515 of the front sections 513 being aligned with one another and the openings 516 of the rear sections 514 being aligned with one another. In some embodiments, the first arms 512 are identical to one another. By aligning the openings 515, 516 of each first arm 512 with the respective opening 515, 516 of the other first arm 512, the desired movement of the frame assembly 310 can be provided, as will be described further herein. The first arms 512 also may each include an actuator bracket 517 coupled to the rear section 514 and a coupling bracket 518 coupled to the front section 513.

Referring specifically now to FIG. 5B, which illustrates the second frame 520, it can be seen that the second frame 520 may similarly include a pair of second arms 523 that are coupled to one another. In some embodiments, the second arms 523 are coupled to one another by the channel 522 and/or by one or both of the cutter rails 521. Each of the second arms 523 may include a front section 524 that is coupled to a rear section 525, with the sections 524, 525 extending in opposite directions. One of the cutter rails 521 may couple to the front section 524 and the channel 522 and the other one of the cutter rails 521 may couple to the rear section 525 of each of the second arms 523. Each of the second arms 523 may also include a pair of elongated slots 526, 527 that are each aligned with a respective elongated slot 526, 527 of the other second arm 523. Unlike the openings 515, 516 of the first arms 512, which may be generally circular, the elongated slots 526, 527 of the second arms 523 may be elongated in order to allow the previously described pivoting motion of the second frame 320 with respect to the first frame 310, e.g., a pivot rod extending through the openings 515, 516 may substantially fill the openings 515, 516 to hold the first frame 510 in place while the elongated slots 526, 527 allow the second frame 520 to pivot/slide about the same pivot rod. For example, each of the second arms 523 may have an elongated slot 526 formed in the front section 524 and another elongated slot 527 formed in the rear section 525, with the elongated slots 526 of the front sections 524 being aligned with one another and the elongated slots 527 of the rear sections 525 being aligned with one another. In some embodiments, the second arms 523 are identical to one another. Further, the elongated slots 526 of the front section 524 of the second arms 523 may also be aligned with the aligned openings 515 of the front sections 513 of the first arms 512 and the elongated slots 527 of the rear sections 525 of the second arms 523 may be aligned with the aligned openings 516 of the rear sections 514 of the first arms 512. Each of the hinge pins 340 may be placed in one of the openings 515 of the front sections 513 and the elongated slot 526 of the front section 524 of the adjacent second arm 523 so the second frame 520 is coupled to the first frame 510. The hinge pins 340 may substantially fill the openings 515 while only partly filling the elongated slots 526. However, pivoting of the second frame 520 about the hinge axis HA/hinge pins 340 generally only occurs in conjunction with pivoting of the first frame 510 about the hinge axis HA/hinge pins 340. Providing the openings 515, 516 and elongated slots 526, 527 of the arms 512, 523 can enable movement of the frame assembly 310 in the desired manner, as will be described further herein. In some embodiments, the second arms 523 are the laterally outward arms of the frame assembly 310 while the first arms 512 are disposed between the second arms 523.

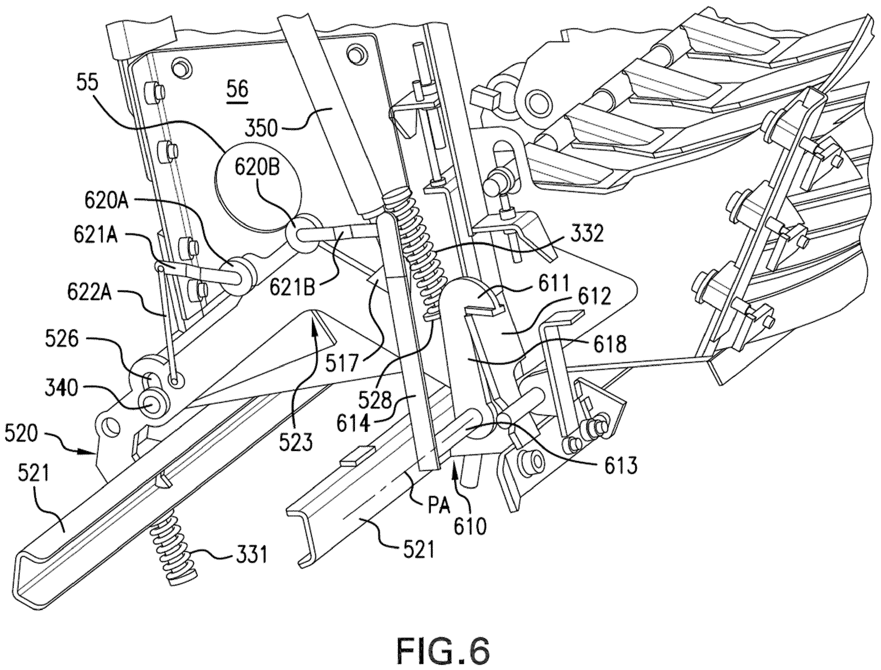

Referring specifically now to FIGS. 6-8, it is illustrated how the frame assembly 310 can be moved from the cutting position to the maintenance position so the cutter 320 can be removed and/or otherwise maintained. For ease of illustrating the function of the frame assembly 310, the cutter 320 is not illustrated in FIGS. 6-8 but it should be appreciated that, during operation, the cutter 320 would normally be coupled to the frame assembly 310, *e.g.*, to the cutter rails 521. As illustrated in FIG. 6, the frame assembly 310 is in a cutting position where the frame assembly 310 holds the cutter 320 in a position where the cutter 320 can cut crop material that is moved by the rotor 50. In the illustrated embodiment, the cutter 320 works in conjunction with the rotor 50 to cut the crop material, *i.e*., in a scissor-like manner, but it should be appreciated that in some embodiments the cutter 320 is capable of cutting crop material without working in conjunction with the rotor 50.

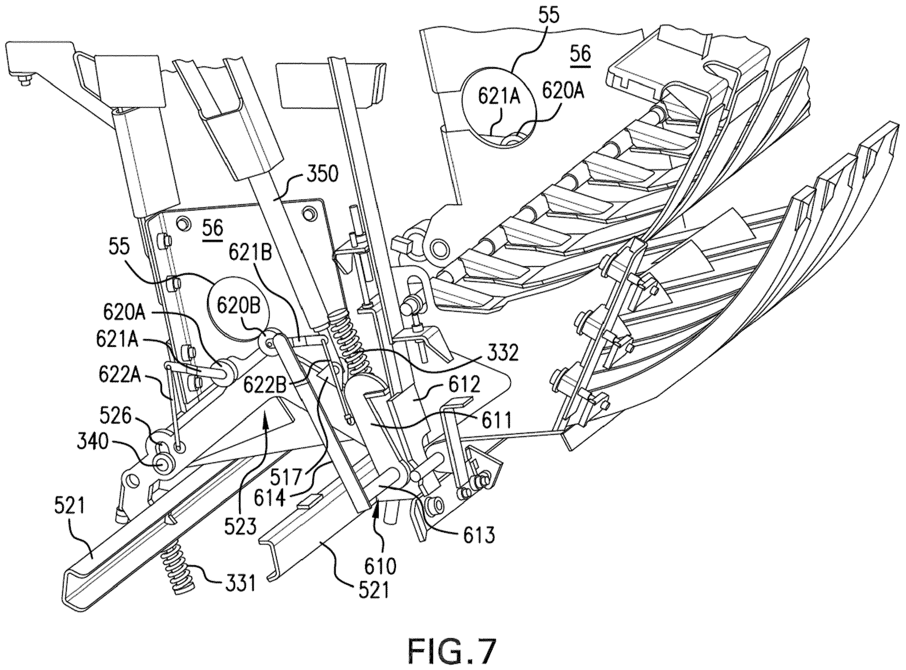

To keep the frame assembly 310 in the cutting position, a locking mechanism 610 is coupled to the frame assembly 310. In some embodiments, the locking mechanism 610 includes a pair of hooks 611 (with only one being illustrated in FIGS. 6-8) that are pivotable between a locking position (illustrated in FIG. 6) where the hooks 611 grasp a pair of catches 612 (with only one being illustrated in FIGS. 6-8). The hooks 611 may, for example, be coupled to a pivot rod 613 that also extends through the openings 516 and elongated slots 527 of the first arms 512 and the second arms 523, respectively. The pivot rod 613 may be coupled to a handle 614 that allows a user to pivot the pivot rod 613 about a pivot axis PA defined through the pivot rod 613. By pivoting the pivot rod 613 about the pivot axis PA with the handle 614, a user may manually pivot the locking mechanism 610 from the locking position to a release position (illustrated in FIGS. 7-8).

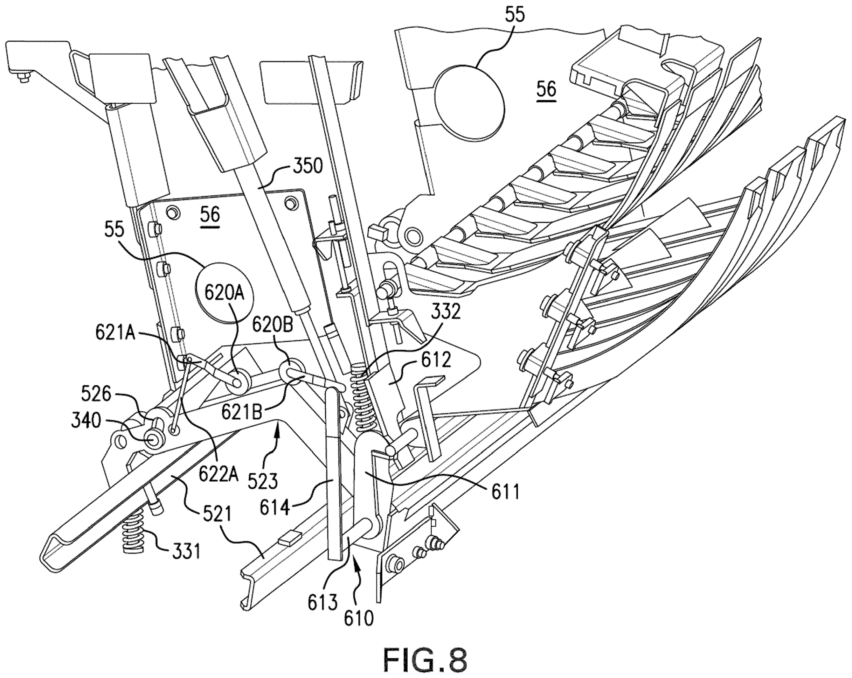

When the locking mechanism 610 is in the release position illustrated in FIGS. 7-8, the entire frame assembly 310 (not just the second frame 520) may be lowered to a position that allows the second frame 520 to pivot away from the first frame 510 to the maintenance position so the cutter 320 can be removed, as can be appreciated from comparing FIGS. 7 and 8. The cutter 320 can be removed or otherwise moved, for example, by sliding the knife drawer 321 along and/or off the cutter rails 521 when the frame assembly 310 is in the lowered maintenance position illustrated in FIG. 8. To raise and lower the frame assembly 310, one or more actuators 350 may be provided that are configured to selectively move the frame assembly 310. In the illustrated embodiment, a pair of actuators 350 may be provided. The actuators 350 may, for example, couple to the actuator brackets 517 of the first arms 510 in order to raise and lower the frame assembly 310. The actuators 350 can also set the initial distance between the rotor 50 and the cutter 320 while the locking mechanism 610 is in the release position, with the locking mechanism 610 then being moved to the locking position so the frame assembly 310 is held with the initial distance between the rotor 50 and the cutter 320 when no crop pressure is exerted on the cutter 320. In other words, the locking mechanism 610 is movable from the locking position that prevents the actuators 350 from moving the frame assembly 310 from the cutting position and the release position that allows the actuators 350 to move the frame assembly 310.

The pivot rod 613 may substantially fill the openings 516 so the first arms 512 are generally held in place vertically by the locking mechanism 610 when the locking mechanism 610 is in the locking position. The elongated slots 527, on the other hand, have a length L (denoted in FIG. 5A) that allows the second frame 520, to which the cutter 320 is coupled, to vertically move up and down even when the locking mechanism 610 is in the locking position and the frame assembly 310 is in the cutting position. In this respect, the second frame 520 allows the cutter 320 to move up and down responsively to changes in cut crop volume and/or density between the rotor 50 and the cutter 320 while the frame assembly 310 is in the cutting position. Particularly, accumulating cut crop volume (or higher density crop material) can exert increased pressure on the cutter 320, which exerts a downward force on the second frame 520. When the cut crop material exerts sufficient pressure on the second frame 520, the second frame 520 (and carried cutter 320) responsively moves away from the rotor 50 to reduce the pressure. The movement of the second frame 520 and cutter 320 away from the rotor 50 to decrease the pressure can reduce compaction of the crop material sufficiently so the rotor 50 can again move the crop material and prevent a clog from forming. The length L of the elongated slots 526, 527 can control the maximum drop distance of the second frame 520; for example, the length L can be equal to the maximum drop distance and be between 10 mm and 50 mm, such as 30 mm, which may be varied according to how far it is desired for the second frame 520 to drop during operation. The locking mechanism 610 holding the first frame 510 vertically, on the other hand, prevents the entire frame assembly 310 from dropping, which allows the cutter 320 to remain in the cutting position even when the source of increasing crop pressure between the rotor 50 and the cutter 320 is removed. In other words, in some embodiments the second frame 520 is the only portion of the frame assembly 310 that moves responsively to crop volume and/or density changes between the rotor 50 and the cutter 320 while the frame assembly 310 is in the cutting position and the first frame 510 and the locking mechanism 610 together generally hold the frame assembly 310 in the cutting position.

To return the second frame 520 back to its previous position and also prevent the second frame 520 from freely dropping, the suspension assembly 330 is provided. The suspension assembly 330 may include, for example, at least one pair of springs and/or dampers, illustrated in the form of springs 331 and 332, that are coupled to the frame assembly 310. The springs and/or dampers may be provided in the form of one or more coil springs, one or more gas springs, and/or one or more fluid cylinders. It should be appreciated that any reference to a spring of the suspension assembly 330 herein is similarly applicable to a damper of the suspension assembly 330. When there are two pairs of arms 512, 523, there may be two pairs of springs 331, 332 provided, *i.e.,* the number of pairs of springs may be equal to the number of sets of arms. One of the springs 331 may couple to the front section 513, 524 of one or both of the arms 512, 523 and the other one of the springs 332 may couple to the rear section 514, 525 of one or both of the arms 512, 523. In the illustrated embodiment, the springs 331, 332 both couple to the second frame 520, with the spring 331 coupling to the front section 524 of the second arms 523 and the spring 332 coupling to the rear section 525 of the second arms 523. Each of the springs 331, 332 may, for example, be coupled to and bear on a respective spring bracket 528 coupled to the front section 524 and the rear section 525. The springs 331 coupled to the front sections 524 may control the drop behavior for the front sections of the cutter 320 while the springs 332 coupled to the rear sections 525 may control the drop behavior for the rear sections of the cutter 320. The springs 331, 332 may be tuned in a variety of ways. If the loads on the different sections of the cutter 320 differ, *e.g.*, due to weight distribution, the springs 331, 332 may be tuned to compensate accordingly. It may be undesirable, for example, for the second frame 520 and the cutter 320 to drop from a neutral position when there is a small pressure exerted on the cutter 320, as this can change the cut quality of crop material that will be added to the forming bale. Thus, the springs 331, 332 may be tuned to only allow the distance between the second frame 520 (and the held cutter 320) and the rotor 50 to change when the pressure exerted on the cutter 320 exceeds a threshold pressure. In some embodiments, the springs 331 coupled to the front sections 524 may be tuned to drop faster, *i.e*., responsively to a lower pressure on the cutter 320, in order to act as an early warning that rotor torque is increasing. The previously described tuning may be done, for example, by adjusting the spring constant of the springs 331, 332, in the case of a coil spring, and one skilled in the art should be familiar with how to tune other types of springs and/or dampers in a similar fashion.

As can be appreciated from the foregoing, the movement of the frame assembly 310 happens in response to changes in volume and/or density of crop material between the rotor 50 and the cutter 320, which increase the pressure on the cutter 320. Such changes in volume and/or density can be monitored to adjust one or more operating parameters of the agricultural baler 10 in order to further reduce the risk of a clog occurring.

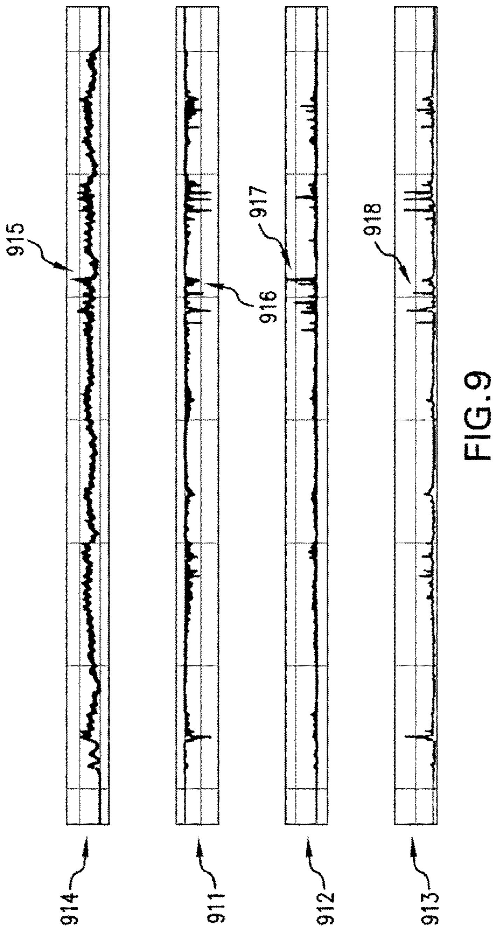

Referring still to FIGS. 3 and 6-8, and referring now to FIG. 9 as well, it is illustrated that the agricultural baler 10 may include one or more sensors 620A, 620B that are associated with the frame assembly 310 and are configured to output a distance signal corresponding to the distance between the cutter 320 and the rotor 50. In the illustrated embodiment, two sensors 620A are provided with each of the sensors 620A being associated with a respective front section 524 of the second arms 523 and two sensors 620B are provided with each of the sensors 620B being associated with a respective rear section 525 of the second arms 523. Each of the sensors 620A, 620B may be, for example, a potentiometer that is coupled to the first frame 510 and has a respective arm 621A, 621B coupled to its respective section 524, 525 by a link 622A, 622B. The sensors 620A, 620B may thus measure an angle between the sections 524, 525 and a respective pivot point, *i.e.,* in the body of each sensor 620A, 620B, with the measured angle corresponding to the distance between the respectively coupled section 524, 525 and the rotor 50, which corresponds to the distance between the cutter 320 and the rotor 50. By providing four different sensors 620A, 620B that are each associated with a different section 524, 525 of the second arms 523 and configured to output the distance between the respectively coupled section 524, 525 and the rotor 50, the movement behavior of the frame assembly 310, *i.e.,* the second frame 520 and the held cutter 320, can be monitored and operation of the agricultural baler 10 can be adjusted accordingly.

Exemplary readouts 911, 912, 913 that may be obtained from some of the sensors 620A, 620B are illustrated in FIG. 9. An additional readout 914, corresponding to the torque of the rotor 50, is also illustrated. As can be seen, when the torque at the rotor 50 increases, indicating that there is increased crop volume between the rotor 50 and the cutter 320, the angle sensed by the sensors 620A, 620B changes, which can be seen by the spikes in the readouts 911, 912, 913. The spikes in the readouts 911, 912, 913 correspond to the second frame 520 moving to increase the distance between the rotor 50 and the cutter 320. As can be especially seen in comparing the torque following a torque spike 915 in the readout 914 and corresponding angle changes 916, 917, 918 in the readouts 911, 912, 913, the movement of the second frame 520 and the cutter 320 (indicated by the angle changes 916, 917, 918) away from the rotor 50 reduces the torque at the rotor 50, indicating that the conditions that tend to cause clogging have been eliminated. Thus, it should be appreciated that the second frame 520 (and the carried cutter 320) moving away from the rotor 50 reduces the risk that clogs form in the rotor cutter assembly 18.

To monitor the movement behavior of the cutter 320 and adjust the operation of the agricultural baler 10, the agricultural baler 10 can include a controller 60 that is operably coupled to the sensor(s) 620A, 620B and configured to adjust at least one operating parameter of the agricultural baler 10 and/or output an alert signal responsively to the distance between the cutter 320 and the rotor 50 changing by more than a defined amount. For example, the controller 60 may be configured to determine the distance between the cutter 320 and the rotor 50 has changed by more than the defined amount by sensing that the distance signal output by one or more of the sensors 620A, 620B exceeds a defined value. Upon sensing that the distance between the cutter 320 and the rotor 50 has changed by more than the defined amount, the controller 60 may output one or more adjustment signals to one or more elements of the agricultural baler 10 or, in some embodiments, to another vehicle, such as a tractor towing the agricultural baler 10, in order to adjust the operation of the agricultural baler 10 and reduce the risk of a clog occurring. Alternatively or in addition, the controller 60 may be configured to output an alert signal to, for example, a display or other element that can produce a visual alert and/or an audio alert and/or a tactile alert to catch the user's attention and indicate that the distance between the cutter 320 and the rotor 50 has changed by more than the defined amount. Alternatively, or in addition, the controller 60 may be configured to determine that the distance between the cutter 320 and the rotor 50 has changed by the defined amount for a defined time period, indicating that the volume of crop material between the cutter 320 and the rotor 50 is not clearing. Exemplary operating parameters that may be adjusted include, but are not limited to, a rotation speed of the rotor 50, a rotation speed of the pickup 12, a travel speed of the agricultural baler 10, , which may be adjusted by outputting a signal to a tractor or other vehicle towing the agricultural baler 10 if the agricultural baler 10 is not self-propelled, and/or a triggering of the stuffer apparatus 24 to clear out the pre-compression chamber 22. It is well-known in the art how such operating parameters may be adjusted, so further description is omitted for brevity.

In some embodiments, the agricultural baler 10 includes a clutch 70 that is coupled to the rotor 50 and is configured to disconnect the rotor 50 from a power source responsively to a resistance to rotation of the rotor 50 exceeding a defined value. The resistance to rotation may be, for example, the torque that is illustrated in the readout 914 illustrated in FIG. 9. While the clutch 70 disconnecting the rotor 50 from the power source is beneficial in the sense that it protects the rotor 50 and other components from damage, it is also inconvenient if the clutch 70 triggers because the user must then manually clear out the clog (or other condition) that caused the clutch 70 to trigger. The controller 60 may be configured to determine the resistance to rotation is approaching the defined value, indicating that an operation-stopping clog is developing, and adjust the at least one operating parameter to avoid the resistance to rotation reaching the defined value, which would trigger the clutch 70 and disconnect the rotor 50 from its power source. The controller 60 may be configured, for example, to determine the resistance to rotation has reached a warning value that indicates the resistance to rotation is approaching the defined value that will cause the clutch 70 to trigger. Responsively, the controller 60 may output one or more adjustment signals to adjust one or more operating parameters of the agricultural baler 10, e.g., reducing the rotation speed of the rotor 50 and/or the pickup 12 and/or the travel speed of the agricultural baler 10, so less crop material is fed to the rotor 50 to reduce the risk of the rotor 50 clogging. The controller 60 may be further configured to determine the resistance to rotation has fallen below the warning value and adjust one or more operating parameters to increase the flow of crop material, *e.g.*, by increasing the rotation speed of the rotor 50 and/or the pickup 12 and/or the travel speed of the agricultural baler 10. It should thus be appreciated how the controller 60 provided according to the present disclosure can monitor the movement of the cutter 320, *e.g.*, by monitoring the position of the second frame 520, to reduce the risk of a clog disrupting operation of the agricultural baler 10.

From the foregoing, it should be appreciated that the rotor cutter assembly 18 provided according to the present disclosure has a cutter 320 that can move in response to changes in crop volume between the rotor 50 and the cutter 320 while also being removable from the frame assembly 310. Such a cutter 320 may be used, for example, in a large square baler. The disclosed rotor cutter assembly 18 includes a frame assembly 310 that is compact and also has many of the same features of fixed rotor floors, *e.g.,* the ability to lock in and set the initial cutting position, while providing the ability for the cutter 320 to drop in response to increasing crop volume. Further, the present disclosure provides a controller 60 that can be configured to adjust one or more operating parameters of the agricultural baler 10 in response to movement of the cutter 320. All of these features combined can provide an agricultural baler 10 that is less prone to clogging, which can decrease operational downtime and user frustration.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein, but is intended to include all changes and modifications that are within the scope and spirit of the invention.

## Claims

1. A rotor cutter assembly (18) for an agricultural baler (10), the rotor cutter assembly (18) comprising:
a rotatable rotor (50);
a rotor floor assembly (300) disposed below the rotor (50) and comprising a frame assembly (310); and
a cutter (320) coupled to the frame assembly (310) and configured to cut crop material moved by the rotor (50) during rotation of the rotor (50) while the frame assembly (310) is in a cutting position;
**characterized in that:**
the rotor floor assembly (300) comprises a suspension assembly (330) coupled to the frame assembly (310) such that a distance between the cutter (320) and the rotor (50) is adjustable responsively to crop volume and/or density changes between the rotor (50) and the cutter (320) while the frame assembly (310) is in the cutting position, the frame assembly (310) is movable to a maintenance position where the cutter (320) is removable from the frame assembly (310), and only a portion (520) of the frame assembly (310) is movable in the cutting position.

2. The rotor cutter assembly (18) of claim 1, wherein the frame assembly (310) comprises a first frame (510) and a second frame (520) coupled to the first frame (510), the second frame (520) being the only portion of the frame assembly (310) that is movable in the cutting position.

3. The rotor cutter assembly (18) of claim 2, wherein the second frame (520) comprises a pair of cutter rails (521) holding the cutter (320).

4. The rotor cutter assembly (18) of claim 2, wherein the second frame (520) comprises a channel (522) and the first frame (510) comprises a rectangular tube (511) that resides within the channel (522).

5. The rotor cutter assembly (18) of any one of claims 2 to 4, wherein the first frame (510) comprises a pair of first arms (512) coupled to one another and the second frame (520) comprises a pair of second arms (523) coupled to one another, wherein the pair of first arms (512) are disposed between the pair of second arms (523).

6. The rotor cutter assembly (18) of claim 5, wherein each of the first arms (512) comprises a pair of openings (515, 516) that are each aligned with a respective opening (515, 516) of the other first arm (512) and each of the second arms (523) comprises a pair of elongated slots (526, 527), each of the elongated slots (526, 527) being aligned with a respective slot (526, 527) of the other second arm (523) as well as a pair of aligned openings (515, 516) of the first arms (512).

7. The rotor cutter assembly (18) of any one of claims 2 to 6, further comprising an actuator (350) coupled to the first frame (510) that is configured to selectively move the frame assembly (310) between the cutting position and the maintenance position.

8. The rotor cutter assembly (18) of any one of claim 7, further comprising a locking mechanism (610) coupled to the first frame (510), the locking mechanism (610) being movable from a locking position that prevents the actuator (350) from moving the frame assembly (310) from the cutting position and a release position that allows the actuator (350) to move the frame assembly (310).

9. The rotor cutter assembly (18) of any one of the preceding claims, wherein the cutter (320) comprises a knife drawer (321) comprising a plurality of knives (322).

10. The rotor cutter assembly (18) of any one of the preceding claims, wherein the suspension assembly (330) comprises at least one pair of springs (331, 332) and/or dampers, preferably in the form of one or more coil springs (331, 332) and/or one or more gas springs and/or one or more fluid cylinders, coupled to the frame assembly (310).

11. The rotor cutter assembly (18) of claim 10, wherein the at least one pair of springs (331, 332) and/or dampers is coupled to the second frame (520) of the frame assembly (310).

12. An agricultural baler (10), comprising:
a chassis;
a pickup (12) carried by the chassis and comprising a plurality of tines (16) configured to pick up crop material from a field; and
the rotor cutter assembly (18) of any one of the preceding claims carried by the chassis and configured to receive picked up crop material from the pickup (12) and cut the received crop material.

13. The agricultural baler (10) of claim 12, further comprising at least one sensor (620A, 620B) associated with the frame assembly (310) and configured to output a distance signal corresponding to the distance between the cutter (320) and the rotor (50) and a controller (60) operably coupled to the at least one sensor (620A, 620B), the controller (60) being configured to adjust at least one operating parameter of the agricultural baler (10) and/or output an alert signal responsively to the distance between the cutter (320) and the rotor (50) changing by more than a defined amount.

14. The agricultural baler (10) of claim 13, wherein the at least one operating parameter comprises a rotation speed of the rotor (50), a rotation speed of the pickup (12), a travel speed of the agricultural baler (10), and/or a triggering of a stuffer apparatus (24).

15. The agricultural baler (10) of claim 13 or claim 14, further comprising a clutch (70) coupled to the rotor (50) and configured to disconnect the rotor (50) from a power source responsively to a resistance to rotation of the rotor (50) exceeding a defined value, wherein the controller (60) is configured to determine the resistance to rotation is approaching the defined value and adjust the at least one operating parameter to avoid the resistance to rotation reaching the defined value.
